**Europäisches Patentamt**

(19) **European Patent Office**

**Office européen des brevets**

(11) Publication number: **0 111 782**

**B1**

(12) # EUROPEAN PATENT SPECIFICATION

(45) Date of publication of patent specification: 10.08.88     (51) Int. Cl.⁴: **F 04 D 29/20**

(21) Application number: **83111915.1**

(22) Date of filing: **14.05.79**

(88) Publication number of the earlier application in accordance with Art. 76 EPC: **0 030 230**

(54) Turbocharger with a retainer for securing the compressor to the compressor shaft.

(43) Date of publication of application:
**27.06.84 Bulletin 84/26**

(45) Publication of the grant of the patent:
**10.08.88 Bulletin 88/32**

(84) Designated Contracting States:
**DE FR**

(56) References cited:
**DE-B-1 017 320**
**DE-B-1 036 273**
**DE-B-2 457 231**
**FR-A- 613 632**
**GB-A- 770 004**
**GB-A-1 312 528**

(73) Proprietor: **OSBORN, Norbert L.**
**151 Regal Row Suite 120**
**Dallas TX 75247 (US)**

(72) Inventor: **OSBORN, Norbert L.**
**151 Regal Row Suite 120**
**Dallas TX 75247 (US)**

(74) Representative: **UEXKÜLL & STOLBERG**
**Patentanwälte**
**Beselerstrasse 4**
**D-2000 Hamburg 52 (DE)**

EP 0 111 782 B1

Courier Press, Leamington Spa, England.

## Description

The invention relates to turbomachinery, e.g., a turbocharger, a turbojet or a turbofan engine, comprising a compressor rotor mounted for rotation on a compressor shaft, a retainer for securing the compressor rotor to the compressor shaft, wherein the compressor rotor has an aperture therethrough for receiving the compressor shaft therein.

In prior turbochargers and the like a threaded nut is used to attach the compressor rotor to the shaft. However, the bending loads normally introduced into the shaft by torquing the nut onto the shaft cause a deflection which results in an imbalance in the rotor/shaft assembly. As a result, it is difficult and expensive, if not in many cases, impossible, to achieve an accurate balance of the rotor/shaft combination. Often the rotor is attached to the shaft and then the combination is tested within the turbocharging housing for proper balance. If the unit is out of balance, the turbocharger is disassembled and the rotor removed and rotated 1/4 turn and retested. This procedure is repeated until a balancing is achieved.

Obviously, such method of balancing the turbocharger rotor/shaft assembly is difficult and expensive.

In another prior turbomachinery (GB—A—1,312,528) a retaining sleeve is used to mount a rotor on a shaft. The circular central hole of the retainer sleeve has a diameter to form an interference fit with the end of the shaft. The retaining sleeve has an external shape which corresponds to the recess in the rotor to generate a positive coupling between the shaft and the rotor.

When assembling such prior arrangement it is difficult to position the retaining sleeve on the shaft so that the retaining sleeve does not engage against the rotor with a force which would impart any bending forces in the shaft. Such bending forces can cause a deflection of the shaft which results in an imbalance in the rotor/shaft assembly.

It is an object of the invention to provide means for precisely mounting the retaining sleeve on the shaft of a turbomachinery and for adjusting its position as is required.

To achieve such objective a turbomachinery, particularly a turbocharger comprising a compressor rotor mounted for rotation on a compressor shaft, wherein the compressor rotor has an aperture therethrough for receiving said compressor shaft and further comprising a retaining sleeve having a bore therethrough for mounting said sleeve onto said shaft adjacent the compressor rotor, said sleeve bore having a diameter to form an interference fit over said shaft such that the sleeve alone prevents axial movement of the compressor rotor on the shaft in the direction of the sleeve and said sleeve having an engagement surface for engaging said compressor rotor to transmit torque from said shaft to said compressor rotor through said retaining sleeve, is improved in that said sleeve is formed with threads around the outer circumference to permit engagement of said sleeve for installation and removal thereof.

By providing threads around the outer circumference of the sleeve engagement of an appropriate tool is permitted to facilitate precise mounting and also easy removal of the sleeve which sleeve is pressed onto the shaft.

Additionally, the turbomachinery may further comprise a spring means positioned between said retaining sleeve and the compressor rotor for applying a force between the compressor and said retaining sleeve for maintaining an axial force on the compressor rotor. Conveniently the spring means is a Belville spring. The spring means maintain an engagement force between the retainer sleeve and the compressor rotor even if in operation of the turbo-machinery contractions or expansions in the shaft or the compressor rotor should occur.

The shaft may be hardened to facilitate retention of the retaining sleeve thereon but to permit removal of the sleeve without damage to the shaft.

For a more complete understanding of the present invention, and for further details and advantages thereof, reference is now made to the following description taken in conjunction with the accompanying drawings, in which:

Figure 1 is a perspectivew view of a turbocharger;

Figure 2 is a vertical section taken along lines 2—2 of the turbocharger illustrated in Figure 1;

Figure 3 is an exploded perspective view showing the turbine rotor, compressor-turbine shaft, the compressor and turbine backwalls, compressor bushing, compressor rotor and retaining sleeve;

Figure 4 is a section view taken along line 9—9 of Figure 2;

Figure 5 is an alternative embodiment of the present invention showing the use of a spring member between the retaining sleeve and the compressor rotor.

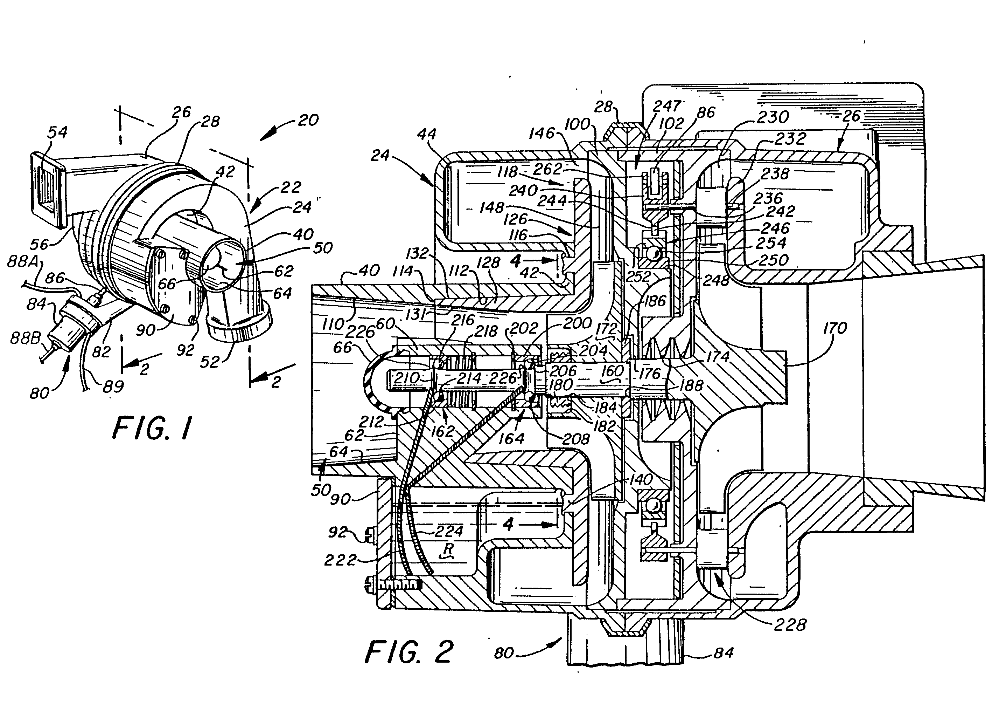

Figure 1 is a perspective view of a turbocharger 20 which turbocharger is described in detail in European Patent Application EP—A—30,230 which is the parent application of the present application. The turbocharger includes an outer structure 22 consisting of a compressor housing unit 24 coupled to a turbine housing unit 26 by a V-clamp band 28.

Referring to Figures 1 and 2, compressor housing unit 24 includes a tubular inlet port 40 with a transverse wall 42 attached to one end of port 40 and extending outwardly therefrom. A circumferential chamber 44 is attached from wall 42. Inlet port 40 defines a compressor air inlet 50 and circumferential chamber 44 defines a compressor exhaust 52. Turbine housing 26 defines a turbine air inlet 54 and a turbine exhaust 56.

In operation of the turbocharger, air is drawn into inlet 50 and compressed air is discharged from exhaust 52 to an internal combustion engine to which the turbocharger is mounted. Exhaust air from the engine is channeled into turbine air inlet 54 to drive the turbocharger turbine and is exhausted through turbine exhaust 56.

Referring still to Figures 1 and 2, a bearing support cylinder 60 is mounted within inlet port 40 by a plurality of vanes 62 extending from the inside wall surface 64 of inlet port 40. A cap 66 is mounted over the end of support cylinder 60. A piston type actuator 80 is mounted by bracket 82 (Figure 1) to turbine housing 26. Actuator 80 includes a controller 84 operated to extend and retract control rod 86 as will be discussed hereinafter in greater detail. (The controller is described in co-pending European Patent Application EP—A—111,781 which is also a divisional application of European Patent Application EP—A—30,230). Air lines 88 and 89 provide air to controller 84 as necessary to operate rod 86. An oil reservoir cover plate 90 is attached to compressor housing unit 24 by a plurality of screws 92.

Referring specifically to Figure 2, a compressor backwall 100 and a turbine backwall 102 are positioned intermediate of compressor housing unit 24 and turbine housing unit 26 when these two units are assembled. These four components are piloted one to another and held in assembly by V-clamp 28. As previously described, compressor housing unit 24 includes a tubular inlet port 40 with a transverse wall 42 attached to one end thereof to one of the inlet ports and extending outwardly therefrom. A circumferential chamber 44 is attached to the end of wall 42 remote from inlet port 40 and has a varying area around its circumference increasing to the discharge provided by compressor exhaust 52 (Figure 1).

Inlet port 40 has a first inside wall portion 110 having a converging diameter toward wall 42 and a second inside wall portion 112 joined to first inside wall portion 110 by a step 114. The second inside wall portion 112 has a diverging diameter toward wall 42. Wall 42 has a plurality of circumferentially spaced apertures 116 therethrough. Chamber 44 has an opening 118 substantially in the plane of wall 42 in addition to compressor exhaust 52.

A forward compressor wall insert 126 includes a tubular throat 128 and a circular disc 130 attached transversely from one end of throat 128. Throat 128 has an inside wall surface 131 having a diameter converging toward disc 130 and an outer surface 132 having a diameter diverging toward disc 130. The diverging diameter surface 132 corresponds to the diverging surface of inside wall portion 112 of inlet port 40 such that throat 128 may be inserted within and mated with inlet port 40. The converging diameter inside wall surface 131 of throat 128 corresponds to the extension of converting diameter of first inside wall portion 110 of inlet port 40. When insert 126 is mated into inlet port 40, a continuous converging diameter is provided from the inlet of port 40 inwardly into the turbocharger.

As to the compressor housing unit 24 and the compressor well insert 126 shown in Figure 2 and their production it is referred to co-pending European Patent Application EP—A—122,328 which is also a divisional application of European Patent Application EP—A—30,230.

A plurality of rivet-like protrusions 140 extend from disc 130 and correspond to apertures 116 in wall 42. With the insert engaged to compressor housing 24 with the end of throat 128 engaging step 114 of inlet port 40, protrusions 140 are engaged through apertures 116 with disc 130 abutting the corresponding surface of wall 42. As is shown in Figure 2, protrusions 140 have been inserted into apertures 116 and the heads thereof deformed to attach insert 126 to housing 24. Disc 130 extends beyond wall 42 to partially cover opening 118 of chamber 44. A circumferential gap 146 is formed between the outer tip of disc 130 and the wall of chamber 44, and a diffuser area 148 is formed between disc 130 and compressor backwall 100 between centrifugal flow compressor rotor 172 and gap 146 leading to chamber 44.

Referring still to Figure 2, bearing support cylinder 60 is supported concentrically within inlet port 40 by a plurality of vanes 62 extending inwardly from wall surface 64 of port 40. Turbocharger 20 further includes a shaft 160 supported for rotation in bearing support cylinder 60 by two ball bearing assemblies 162 and 164. A radial flow turbine rotor 170 is mounted at one end of shaft 160 and a centrifugal flow compressor rotor 172 is mounted intermediate of turbine rotor 170 and bearing assemblies 162 and 164. Shaft 160 passes through aperture 176 in compressor backwall 100 and labyrinth seal 174 in turbine backwall 102.

Turbine rotor 170 is fixedly attached to shaft 160, such as by welding, and compressor rotor 172 is retained in position on shaft 160 by retainer nut 180. Compressor rotor 172 is drilled to receive shaft 160 and counterbored to form a bore 182. Bore 182 has a diameter larger than the outer diameter of retainer nut 180 such that retainer nut 180 may be pressed onto shaft 160 into engagement with the bottom wall 184 of bore 182 to retain the compressor rotor in position on shaft 160. A compressor rotor shim 186 is positioned between compressor rotor 172 and a step 188 in shaft 160 to accurately position the compressor rotor in the axial direction.

A ring 200 is fitted within the end of cylinder 60 adjacent compressor rotor 172 and is prevented from moving into cylinder 60 by a retaining ring 202 attached to cylinder 60. Outer raceway 204 of bearing assembly 164 is formed in ring 200, the inner raceway 206 being integrally formed in shaft 160. Balls 208 are engaged between the inner and outer raceways to form bearing assembly 164.

Bearing assembly 162 includes inner raceway 210 formed integrally in shaft 160 and an outer ring 212 slidable within cylinder 60 with an outer raceway 214 formed therein for receiving balls 216. A compression spring 218 is engaged between ring 212 and a retaining ring 220 fixed within cylinder 60 and biases ring 212 outwardly to fix the position of balls 216 and 208 in bearing assemblies 162 and 164, respectively, thereby fixing the position of shaft 160.

The outer raceway 204 is formed in ring 200 with the ball radius on only one side. Thus, the assembly of bearing assembly 164 is made by positioning a full complement of balls 208 in raceway 206, and engaging ring 200 therearound. Similarly, outer raceway 214 is formed in ring 212 with the ball radius on only one side. Balls 216 of bearing assembly 162 are assembled by moving outer ring 212 to compress spring 218 and inserting a full complement of balls 216 in raceway 214 of shaft 160. By releasing ring 212, spring 218 automatically forces the ring into engagement with balls 216 to form bearing assembly 162 while simultaneously engaging ring 200 against balls 208 of bearing assembly 164.

In connection with the bearing arrangement it is referred to co-pending European Patent Application EP—A—121,670 which is also a divisional application of European Patent Application EP—A—30,230.

The mounting of shaft 160 within cylinder 60 is completed by the engagement of cap 66 on the end of cylinder 60 to close the opening in cylinder 60 remote from compressor rotor 172.

The only lubrication provided to the bearing assemblies is through wicks 222 and 224 which transfer oil from a reservoir R by capillary action to ramps or slingers 226. Oil supplied to slingers 226 is projected by centrifugal force to bearing assemblies 162 and 164 during rotation of shaft 160.

The present turbocharger is also provided with a nozzle area control structure 228 for selectively varying the turbine nozzle area to control the speed or pressure output of the turbocharger. Referring to Figures 1 and 2, exhaust gas from the internal combustion engine on which the turbocharger is mounted is injected into the turbocharger through turbine air inlet 54 and channeled against the blades of turbine rotor 170 through a nozzle area 230 formed by turbine backwall 102, a wall 232 parallel thereto and the nozzle vanes 234. This nozzle area is controlled by structure 228 including a plurality of movable nozzle vanes 234 positioned circumferentially about the nozzle area and rotatable to vary flow velocity and angle of exhaust gas to turbine rotor 170. Referring to Figure 2, vanes 234 include trunnions 236 and 238 extending from opposite sides thereof. Trunnion 236 extends through turbine backwall 102 and is attached to actuation lever 240. Trunnion 238 extends into wall 232.

A nipple 242 is formed on one end of each actuation lever. These nipples extend into radial slots 244 formed in a control ring 246. Control ring 246 and actuation levers 240 are situated in air space gap 247 intermediate of compressor rotor 172 and turbine rotor 170. Control ring 246 is concentrically positioned about the axis of shaft 160 and is received on a cylindrical surface 248 extending from compressor backwall 100.

The control ring 246 includes an inner ring 250 and an outer ring 252 formed with an inner and outer raceway, respectively, for receiving a plurality of balls 254 therebetween. Inner ring 250 is fixedly attached to the cylindrical surface 248 extending from compressor backwall 100, and outer ring 252 rotates angularly relative to the inner ring. By the rotation of outer ring 252, each of the actuation levers 240 is rotated about the axes of trunnions 236 and 238, resulting in the simultaneous rotation of each nozzle vane 234. One of the actuation levers 240 is provided with an extension 262. Control rod 86 is attached to the end of extension 262 remote from nipple 242. By the movement of control rod 86, actuation lever 240 is pivoted to angularly rotate outer ring 252 of control ring 246 thereby rotating each of the other actuating levers 240 and nozzle vanes 234 attached thereto.

Controller 84 is designed to extend control rod 86 to open nozzle vanes 234 to turbine rotor 170 at low and high manifold pressures and to retract control rod 86 to close these nozzle vanes at intermediate pressures.

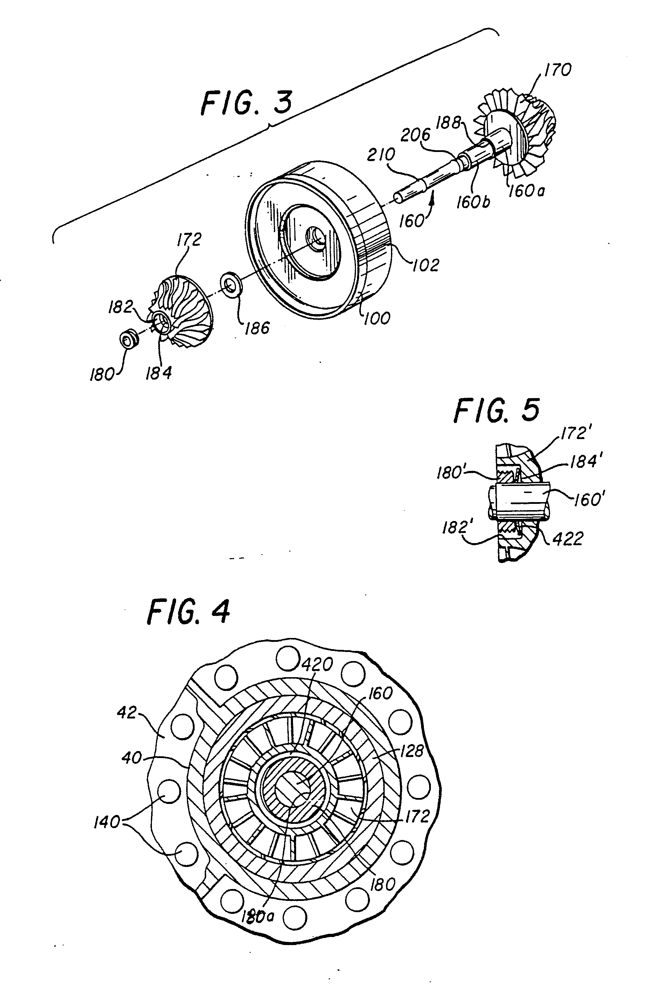

Figure 3 illustrates compressor rotor 172 and retainer nut 180 separated from turbine rotor 170 and compressor-turbine shaft 160. As is shown in Figure 3, turbine rotor 170 is attached to one end of shaft 160, such as by welding or other suitable permanent attachment means. The shaft, prior to its attachment to turbine rotor 170, is formed with an enlarged bearing surface 160a and a step 188 to a narrower diameter shaft portion 160b. As has been previously discussed, raceways 206 and 210 are formed directly in shaft 160.

In assembly, shaft 160 is inserted through apertures in compressor backwall 100 and turbine backwall 102. Shim 186 is positioned over shaft 160 into engagement with step 188 on shaft 160. Compressor rotor 172 is engaged over shaft 160 and rests on shaft portion 160b. Retainer nut 180 is then pressed onto portion 160b into bore 182 of compressor rotor 172 and into engagement with bottom wall 184 of bore 182. Nut 180 consists of a sleeve having a smooth inner bore 180a therethrough. The bore through nut 180 forms an interference fit with portion 160b of shaft 160. The interference, in one embodiment of the invention, is on the order of 0.025 mm (.001 of an inch).

Because the inner raceways are formed directly in the compressor-turbine shaft, the shaft must be heat treated to extremely high degrees of hardness. As a result, the present retaining sleeve secures compressor rotor 172 to shaft 160 without necessitating the grinding or cutting of threads into the hardened shaft. Thus, the cost and problems associated with forming threads on a heat treated shaft are eliminated. Further, because the shaft is substantially hardened, the retaining nut 180 may be pressed onto the shaft and withdrawn without damage to the shaft surface.

As also shown in Figure 3, nut 180 is formed with threads around the outer facing surface thereof. Bore 182 is of a sufficient diameter as to provide a gap 420 (Figure 4) between bore 182 and the threads on the outer surface of nut 180. This gap permits the insertion of an appropriate internally threaded tool for withdrawing the nut from the shaft for removal of the compressor rotor.

In some applications of the present invention, a spring device may be required between the retainer nut and the compressor rotor to maintain an axial force on the compressor rotor during expansion and contraction of components of the turbocharger. Unlike an internally threaded nut engaged on a threaded shaft, the retainer nut of the present invention does not have the capability of developing high compressive loading in the compressor rotor or tension in the compressor-turbine shaft when mounted in position. Therefore, in the alternative embodiment illustrated in Figure 5, a cone shape or Belleville spring 422 is inserted between the retainer nut 180 and the compressor rotor 172.

Because the components in the embodiment illustrated in Figure 5 are identical or correspond to elements in the embodiment illustrated in Figures 2 and 3—4, the same numeral, with the designation prime (') will be used to identify like or corresponding parts to those in the embodiment illustrated in Figures 2 and 3—4. Referring now to Figure 5, shaft 160' is engaged through compressor rotor 172'. Retainer nut 180' is engaged over the end of shaft 160' with Belleville spring 422 mounted on shaft 160' between nut 180' and wall 184' of bore 182' in compressor rotor 172'. Belleville spring 422 is initially compressed as retainer nut 180' is mounted on shaft 160'. The engagement of nut 180' against shaft 160' is sufficient to overcome any expansive forces developed between nut 180' and compressor rotor 172' by Belleville spring 422. Instead, the compression of spring 422 between rotor 172' and nut 180' induces an axial load in rotor 172'. Thus, with spring 422 in place, contractions or expansions in shaft 160' or compressor rotor 172' will not result in a zero engagement force between nut 180' and rotor 172'.

## Claims

1. In turbomachinery, particularly a turbocharger comprising a compressor rotor (172) mounted for rotation on a compressor shaft (160), wherein the compressor rotor (172) has an aperture therethrough for receiving said compressor shaft (160) and further comprising a retaining sleeve (180) having a bore (180a) therethrough for mounting said sleeve (180) onto said shaft (160) adjacent the compressor rotor (172), said sleeve bore (180) having a diameter to form an interference fit over said shaft (160) such that the sleeeve (180) alone prevents axial movement of the compressor rotor (172) on the shaft (160) in the direction of the sleeve (180) and said sleeve having an engagement surface for engaging said compressor rotor (172) to transmit torque from said shaft (160) to said compressor rotor (172) through said retaining sleeve (180), characterized by said sleeve (180) being formed with threads around the outer circumference to permit engagement of said sleeve (180) for installation and removal thereof.

2. Turbomachinery according to Claim 1, characterized by said sleeve (180) having an outer diameter sized to be received within a bore (182) formed in the compressor rotor (172) concentrically with the aperture in the rotor (172) such that the threads on said sleeve (180) may be engaged for extracting said sleeve (180) from the shaft (160).

3. Turbomachinery according to Claim 1 or 2, characterized by the shaft (160) being hardened to facilitate retention of said sleeve (180) thereon but to permit removal of said sleeve (180) without damage of the shaft (160).

4. Turbomachinery according to one of Claims 1 to 3, characterized by spring means (422) positioned between said retaining sleeve (180) and the compressor rotor (172) for applying a force between the compressor rotor (172) and said retaining sleeve (180) for maintaining an axial force on the compressor rotor (172).

## Patentansprüche

1. In einer Turbomaschine, insbesondere einem Turbolader aufweisend einen Kompressorrotor (172), der zur Drehung auf einer Kompressorwelle (160) befestigt ist, hat der Kompressorrotor (172) eine Durchgangsöffnung zur Aufnahme der Kompressorwelle (160) und ferner ist eine Haltebuchse (180) mit einer sich durch sie erstreckenden Bohrung (180a) zur Befestigung der Buchse (180) auf der Welle (160) benachbart zum Kompressorrotor (172) vorhanden, wobei die Buchsenbohrung (180) einen Durchmesser zur Bildung eines Festsitzers mit der Welle (160) hat, so daß die Buchse (180) allein eine axiale Bewegung des Kompressorrotors (172) auf der Welle (160) in Richtung der Buchse (180) verhindert, und wobei die Buchse eine Eingriffsfläche zum Eingriff mit dem Kompressorrotor (172) für die Übertragung eines Drehmomentes von der welle (160) zum Kompressorrotor (172) über die Haltebuchse (180) aufweist, dadurch gekennzeichnet, daß die Buchse (180) um ihren äußeren Umfang ausgebildete Gewindegänge für den Eingriff mit der Buchse (180) bei ihrem Einsetzen und Entfernen hat.

2. Turbomaschine nach Anspruch 1, dadurch gekennzeichnet, daß die Buchse (180) einen so bemessenen Außendurchmesser hat, daß sie von einer Bohrung (182), die im Kompressorrotor (172) konzentrisch zur Bohrung im Rotor (172) ausgebildet ist, aufgenommen wird, so daß die Gewindegänge der Buchse (180) zum Abziehen der Buchse (180) von der Welle (160) ergriffen werden können.

3. Turbomaschine nach Anspruch 1 oder 2, dadurch gekennzeichnet, daß die Welle (160) zur Erleichterung des Haltens der Buchse (180) auf ihr gehärtet ist, jedoch das Entfernen der Buchse (180) ohne Beschädigung der Welle (160) ermöglicht.

4. Turbomaschine nach einem der Ansprüche 1 bis 3, dadurch gekennzeichnet, daß zwischen der Haltebuchse (180) und dem Kompressorrotor (172) Federmittel (422) zum Aufbringen einer Kraft zwischen Kompressorrotor (172) und der Haltebuchse (180) angeordnet sind, um auf den Kompressorrotor (172) eine axiale Kraft wirken zu lassen.

**Revendications**

1. Turbomachine, plus particulièrement turbocompresseur comprenant un rotor de compresseur (172) monté sur un arbre de compresseur (160) de façon à tourner avec celui-ci, ce rotor de compresseur (172) étant traversé par un passage destiné à loger l'arbre de compresseur (160), et comprenant en outre un manchon de retenue (180) traversé par un alésage (180a) destiné au montage dudit manchon (180) sur l'arbre (160) en position adjacente au rotor de compresseur (172), cet alésage (180a) du manchon présentant un diamètre permettant de réaliser un adjustement à tolérance négative sur l'arbre (160) de façon que ce manchon (180) empéche à lui seul le rotor de compresseur (172) de subir un déplacement axial sur l'arbre (160) en direction de ce manchon (180), ce même manchon présentant une surface d'appui destinée à venir en appui sur le rotor de compresseur (172) de façon qu'un couple provenant de l'arbre (160) soit transmis au rotor de compresseur (172) par l'intermédiaire de ce manchon de retenue (180), caractérisé en ce que le manchon (180) présente un filetage tout autour de sa surface périphérique extérieure de manière à permettre une prise de ce manchon (180) en vue de sa mise en place et de son extraction.

2. Turbomachine suivant la revendication 1, caractérisée en ce que le machon 180 présente un diamètre extérieur dimensionné de manière à être reçu à l'intérieur d'un alésage (182) ménagé dans le rotor de compresseur (172) de manière concentrique à l'ouverture réalisée dans ce rotor (172) de sorte qu'on peut venir en prise sur le filetage ménagé sur le manchon (180) afin d'extraire ce manchon (180) dudit arbre (160).

3. Turbomachine selon la revendication 1 ou 2, caractérisée en ce que l'arbre (160) est durci de manière à faciliter le maintien dudit manchon (180) sur lui, mais à permettre une extraction de ce manchon (180) sans endommagement de l'arbre (160).

4. Turbomachine selon l'une quelconque des revendications 1 à 3, caractérisée en ce que des moyens élastiques (422) sont disposés entre le manchon de retenue (180') et le rotor de compresseur (172') afin d'appliquer une force entre ce rotor de compresseur (172') et ce manchon de retenue (180') dans le but de maintenir une force axiale sur ce même rotor de compresseur (172').

FIG. I

FIG. 2

0 111 782

0 111 782

FIG. 3

170
188
206
210
160b
160a
160
102
172
182
186
100
180
184

FIG. 5

172'
180'
184'
160'
182'
422

FIG. 4

420
160
42
128
40
172
140
180
180a

2